# FASCICULE DE BREVET EUROPEEN

(11) **EP 0 964 495 B1**
(45) Date de publication et mention de la délivrance du brevet: **09.05.2007**
(21) Numéro de dépôt: 99401370.4
(22) Date de dépôt: 08.06.1999
(51) Int. Cl.: H02G 3/06, H02G 3/10, H02G 3/04

(54) **Boîte d'encastrement à corps de boîte et pied prolongeant latéralement le corps de boîte, notamment pour appareil électrique**
Unterputzdose mit Körper und Fuss als Doseverlängerung insbesondere für elektrische Geräte
Flush mounted box with body and foot extending the box, especially for electrical apparatus

(30) Priorité: 12.06.1998 FR 9807412
(43) Date de publication de la demande: 15.12.1999
(73) Titulaire: LEGRAND FRANCE, 87000 Limoges (FR); LEGRAND SNC, 87000 Limoges (FR)
(72) Inventeur: Jadaud, Alain, 72240 Tennie (FR)
(74) Mandataire: Santarelli

(56) Documents cités:
- EP-A- 0 202 640
- EP-A- 0 239 456
- EP-A- 0 440 556

## Description

La présente invention concerne d'une manière générale les boîtes d'encastrement du type de celles mises en oeuvre pour l'implantation d'un quelconque appareil, et, notamment, d'un quelconque appareil électrique, au sein même d'un quelconque support, tel que par exemple un mur ou une cloison.

Elle vise plus particulièrement celles de ces boîtes d'encastrement qui comportent, d'une part, un corps de boîte, qui forme un logement propre à la réception du mécanisme d'un tel appareil, et, d'autre part, un pied, qui, prolongeant latéralement le corps de boîte, forme un logement propre à la réception des conducteurs électriques ou autres conduits nécessaires à la desserte de cet appareil.

Ces boîtes d'encastrement comportent en outre usuellement un couvercle apte à recouvrir l'ensemble de leur corps de boîte et de leur pied.

Une telle boîte d'encastrement se trouve notamment décrite dans le brevet européen publié sous le No 0 440 556.

Dans ce brevet européen, le corps de boîte et le pied sont d'un seul tenant l'un avec l'autre, l'ensemble formant de moulage une seule et même pièce.

Une fois faite la mise en place d'une telle boîte d'encastrement dans le support qu'elle doit équiper, une goulotte est implantée à son droit sur ce support, transversalement par rapport à son pied, à compter de la partie basse de celui-ci, pour l'arrivée des conducteurs électriques ou autres conduits nécessaires, cette goulotte venant localement en substitution au couvercle, et celui-ci étant tronçonné en conséquence suivant la largeur de cette goulotte.

Cette solution a donné et peut encore donner satisfaction.

Elle présente cependant l'inconvénient que, le corps de boîte intervenant par construction à une distance donnée de la partie basse du pied, l'appareil qui y est logé est plus ou moins proche de la partie haute de la goulotte suivant la largeur de celle-ci, au détriment, parfois, de l'esthétique, notamment lorsque, suivant une mise en oeuvre possible, la partie subsistante du couvercle reste visible.

Dans la demande de brevet européen EP 0 202 460, il a été proposé une boîte, non encastrée, dont le corps et le pied sont deux pièces distinctes qui comportent des moyens d'engagement complémentaires. Le pied est en appui sur une goulotte de sorte que ce pied comporte une hauteur correspondant sensiblement à celle de la goulotte et le corps reste à une distance donnée de la partie basse du pied.

Dans le brevet américain No 1 774 934, et il en est sensiblement de même dans la demande de brevet internationale publiée sous le No WO91/12461, il a été proposé une boîte d'encastrement dont le corps de boîte est ajustable en hauteur par rapport au pied, un montage coulissant étant prévu à cet effet entre ce corps de boîte et ce pied.

Mais, en pratique, le pied se réduit alors à une simple console de support, et il n'est donc pas à même de servir de logement à de quelconques conducteurs électriques ou à de quelconques autres conduits.

La présente invention a d'une manière générale pour objet une disposition permettant de manière très simple un ajustement en hauteur du corps de boîte par rapport au pied même lorsque ce pied forme un tel logement.

De manière plus précise, elle a pour objet une boîte d'encastrement, notamment pour appareil électrique, du genre comportant un corps de boîte, qui forme un logement propre à la réception du mécanisme d'un tel appareil, et un pied qui, prolongeant latéralement le corps de boîte, forme un logement propre à la réception des conducteurs électriques ou autre conduits nécessaires à la desserte de cet appareil, le pied constituant une pièce distincte du corps de boîte, caractérisée en ce que sur une partie au moins de la longueur du pied à compter de celle de ses extrémités par laquelle il est destiné à être abouté à ce corps de boîte, le pied est segmenté longitudinalement en tronçons successifs, avec, associés à chacun de ces tronçons, des moyens d'engagement, qui, en coopération avec des moyens d'engagement prévus de manière complémentaire en correspondance sur le corps de boîte, en au moins un endroit de celui-ci, sont aptes à permettre sa solidarisation à ce dernier.

Ainsi, suivant la hauteur d'implantation désirée pour l'appareil concerné, et, donc, pour le corps de boîte, il suffit de tronçonner en conséquence le pied, c'est-à-dire d'éliminer de ce pied, à partir de sa partie haute, un ou plusieurs de ses tronçons.

En effet, le premier des troncons du pied subsistant à la partie haute de celui-ci comporte, à l'identique, comme tous les autres, les moyens d'engagement nécessaires à la solidarisation de ce pied au corps de boîte.

Suivant une forme particulière, et préférée, de réalisation, les moyens d'engagement associés à chacun des tronçons du pied comportent une portion d'emboîtement, les moyens d'engagement prévus sur le corps de boîte comportant corollairement une portion d'emboîtement conformée à l'image de celle de ces tronçons.

Par exemple, suivant une forme de réalisation, également particulière, et préférée, de l'invention, la portion d'emboîtement que présente ainsi chacun des tronçons du pied est formée par une fraction, au moins, et, préférentiellement, par la totalité, de la partie de ce tronçon qui appartient au fond du pied, en résultant par exemple très simplement de la configuration même de ce fond.

Suivant un développement de cette disposition, la portion d'emboîtement de chacun des tronçons du pied, et, donc, de la partie correspondante du fond de celui-ci, forme un demi-anneau.

Il en résulte, globalement, que, au moins par son fond, le pied de la boîte d'encastrement suivant l'invention a, dans cette forme de réalisation, la configuration générale d'un demi-tube annelé, à la manière des conduits flexibles annelés couramment mis en oeuvre pour le logement et la protection de conducteurs électriques.

Cette configuration en demi-tube annelé du pied facilite avantageusement le tronçonnage de celui-ci, en évitant que, pour ce faire, il soit prévu, transversalement, de place en place, de manière usuelle, sur celui-ci, de quelconques zones de moindre résistance.

Elle est donc favorable à la rigidité de ce pied, ce qui est particulièrement appréciable, notamment lorsque ce pied doit être encastré dans un mur.

La configuration en demi-tube annelé du pied évite en outre avantageusement les difficultés de moulage qui n'auraient autrement pas manqué de se soulever si, pour le tronçonnage recherché, il avait été prévu, de manière usuelle, sur ce pied, des zones de moindre résistance.

Cette configuration en demi-tube annelé incline en outre avantageusement à utiliser un outil de coupe pour ce tronçonnage, parce qu'elle permet tout naturellement un guidage aisé de cet outil de coupe, au ras de chaque tronçon, ce qui est favorable à l'obtention d'un tronçonnage net relativement difficile à obtenir autrement.

La configuration en demi-tube annelé du pied de la boîte d'encastrement suivant l'invention a encore pour avantage d'autoriser l'usage d'un outil à rainurer classique, dont dispose déjà tout installateur, pour la réalisation de la rainure nécessaire à l'encastrement de ce pied dans le support à équiper.

Lorsque ce support est, par exemple, une cloison creuse, les outils nécessaires à la mise en place de l'ensemble dans un tel support se réduisent alors avantageusement à un tel outil à rainurer classique et à une scie cloche, elle-même classique, puisque, suivant l'invention, le corps de boîte vient s'emboîter directement dans le pied.

Cette mise en place est donc particulièrement aisée à réaliser.

La configuration en demi-tube annelé du pied peut, enfin, avantageusement être mise à profit pour raccorder, si désiré, à ce pied, par simple emboîtement dans celui-ci, un conduit flexible annelé de même type, pour le logement des conducteurs électriques ou autres conduits nécessaires entre la goulotte et ce pied, notamment lorsque l'appareil concerné doit être implanté à une distance relativement grande de cette goulotte.

Ainsi réalisée avec un tel conduit flexible annelé intermédiaire, une installation de ce type assure avantageusement un bon compromis entre une installation encastrée de type classique, qui nécessite des travaux importants et impose en plus d'avoir à refaire la décoration de surface du support concerné, et une installation en saillie, de type également classique, qui nécessite généralement pour sa réalisation tout un ensemble relativement complexe de goulottes et d'accessoires.

Par exemple, lorsque le support à équiper est une cloison mettant en oeuvre des plaques de plâtre doublées d'une garniture isolante sur leur surface interne, il est possible, par l'ouverture réalisée pour l'implantation du corps de boîte, d'enlever, à l'aide d'un outil approprié, la garniture isolante, sur tout le parcours prévu pour le passage d'un tel conduit annelé, sans une quelconque autre intervention sur la surface externe des plaques de plâtre, et, donc, sans aucune détérioration de leur éventuelle décoration de surface.

Par ailleurs, suivant un autre développement de l'invention, le corps de boîte de la boîte d'encastrement suivant l'invention peut, si désiré, être équipé, en deux ou plusieurs endroits distincts, des moyens d'engagement lui permettant d'être solidarisés à un pied.

Ainsi, un tel pied, voire même un simple tronçon de celui-ci, peut avantageusement servir à solidariser, si désiré, entre eux, deux ou plusieurs corps de boîte, pour la constitution d'un ensemble plus complexe, en intervenant alors à la manière d'une entretoise entre de tels corps de boîte.

Les caractéristiques et avantages de l'invention ressortiront d'ailleurs de la description qui va suivre, à titre d'exemple, en référence aux dessins schématiques annexés sur lesquels :

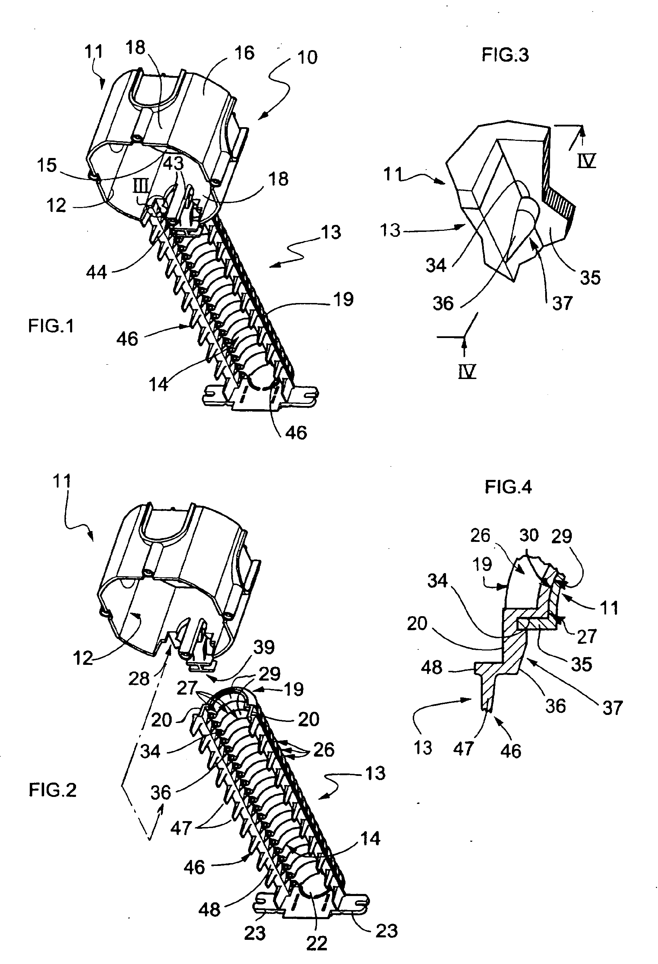

la figure 1 est une vue en perspective d'une boîte d'encastrement suivant l'invention ;
la figure 2 en est une vue en perspective éclatée ;
la figure 3 reprend, à échelle supérieure, le détail de la figure 1 repéré par un encart III sur cette figure 1 ;
la figure 4 est, à l'échelle de la figure 3, et suivant la ligne IV-IV de celle-ci, une vue partielle en coupe transversale de la boîte d'encastrement suivant l'invention ;

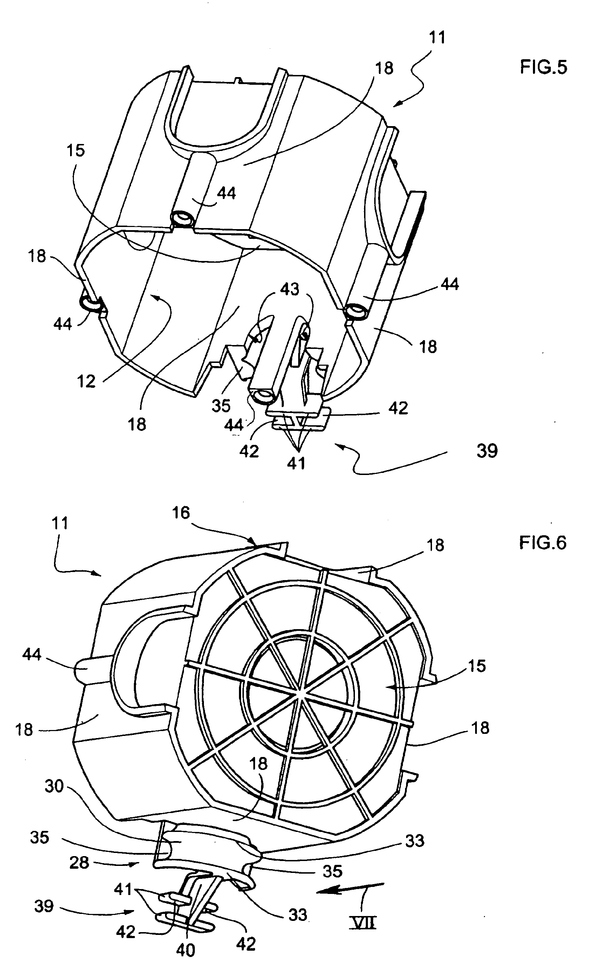

la figure 5 est, à échelle supérieure, et suivant l'orientation des figures 1 et 2, une vue en perspective du seul corps de boîte de cette boîte d'encastrement, représenté isolément, et vu de l'avant ;
la figure 6 est une autre vue en perspective de ce corps de boîte, vu de l'arrière ;

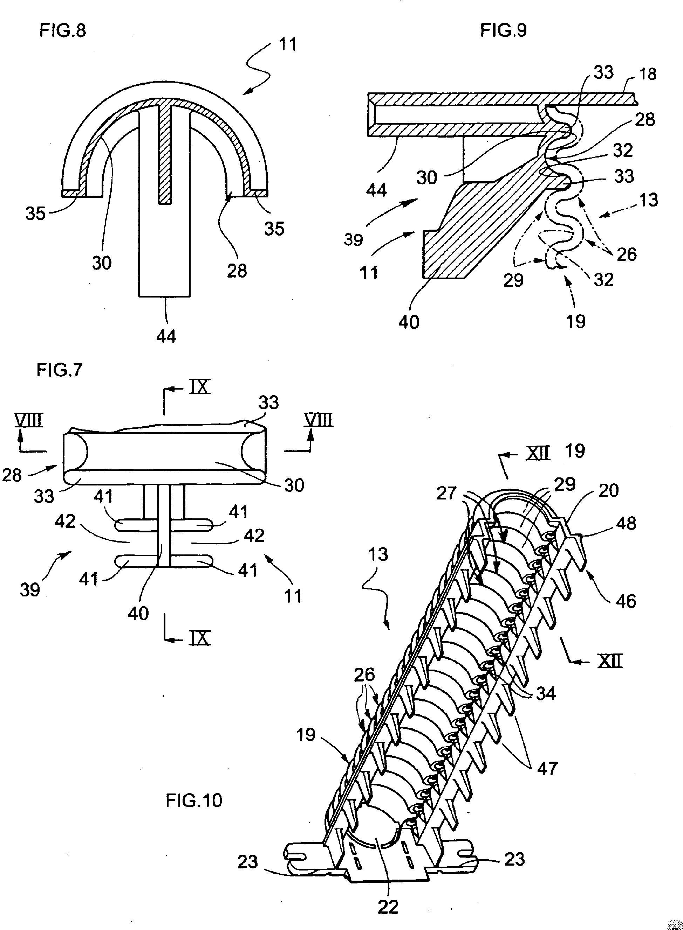

la figure 7 en est, à échelle supérieure, une vue partielle en élévation, suivant la flèche VII de la figure 6 ;
la figure 8 en est, à l'échelle de la figure 7, une vue partielle en coupe transversale, suivant la ligne VIII-VIII de cette figure 7 ;
la figure 9 en est une vue partielle en coupe axiale, suivant la ligne IX-IX de la figure 7 ;
la figure 10 est, à une échelle supérieure à celle des figures 1 et 2, et suivant une autre orientation que sur celles-ci, une vue en perspective du seul pied que comporte également la boîte d'encastrement suivant l'invention, représenté isolément, et vu de l'avant ;
la figure 11 est une autre vue en perspective de ce pied, vu de l'arrière ;
la figure 12 en est, à échelle supérieure, une vue partielle en coupe longitudinale, suivant la ligne XII-XII de la figure 10 ;
la figure 13 en est une vue en coupe transversale, suivant la ligne brisée XIII-XIII de la figure 12 ;
la figure 14 reprend, à échelle supérieure, le détail de la figure 13 repéré par un encart XIV sur cette figure 13 ;
la figure 15 est une autre vue en perspective de la boîte d'encastrement suivant l'invention, vue de l'avant, et avec un couvercle rapporté sur elle ;
la figure 16 est une vue en perspective de ce couvercle, représenté isolément, et vu de l'arrière.

La boîte d'encastrement 10 suivant l'invention représentée sur ces figures est destinée à permettre, de manière connue en soi, l'implantation d'un quelconque appareil, et, notamment, d'un quelconque appareil électrique, non représenté, au sein même d'un quelconque support, également non représenté, tel que par exemple un mur ou une cloison.

Elle comporte, globalement, de manière connue en soi, d'une part, un corps de boîte 11, qui forme un logement 12 propre à la réception du mécanisme de l'appareil concerné, et, d'autre part, un pied 13, qui, prolongeant latéralement le corps de boîte 11, forme, lui-même, un logement 14 propre à la réception des conducteurs électriques ou autres conduits, non représentés, nécessaires à la desserte de cet appareil.

Le logement 12 du corps de boîte 11 et le logement 14 du pied 13 sont l'un et l'autre ouverts dans la même direction, et, suivant des modalités décrites plus en détail ultérieurement, ils communiquent l'un avec l'autre.

Dans la forme de réalisation représentée, le corps de boîte 11 comporte un fond 15, qui, abstraction faite d'un nervurage extérieur de raidissement, est sensiblement plat, et une paroi latérale 16, qui, globalement cylindrique, avec une section circulaire quadrangulaire à angles largement arrondis, s'étend sensiblement perpendiculairement au fond 15.

Le pied 13 est abouté au corps de boîte 11 par l'un des pans 18 de la paroi latérale 16 de celui-ci, au voisinage immédiat de son débouché.

Dans la forme de réalisation représentée, il s'étend sensiblement perpendiculairement à ce pan 18, mais il n'en est pas toujours nécessairement ainsi.

En forme générale d'auge, ou de gouttière, le pied 13 comporte lui-même un fond 19, et, le long des bords de celui-ci, deux parois longitudinales 20, qui, parallèles l'une à l'autre, s'étendent sur toute sa longueur.

Dans la forme de réalisation représentée, le pied 13 est fermé par une paroi transversale d'extrémité 22 à son extrémité opposée au corps de boîte 11, et cette paroi transversale d'extrémité 22 se prolonge latéralement, et de part et d'autre, par des ailes de fixation 23.

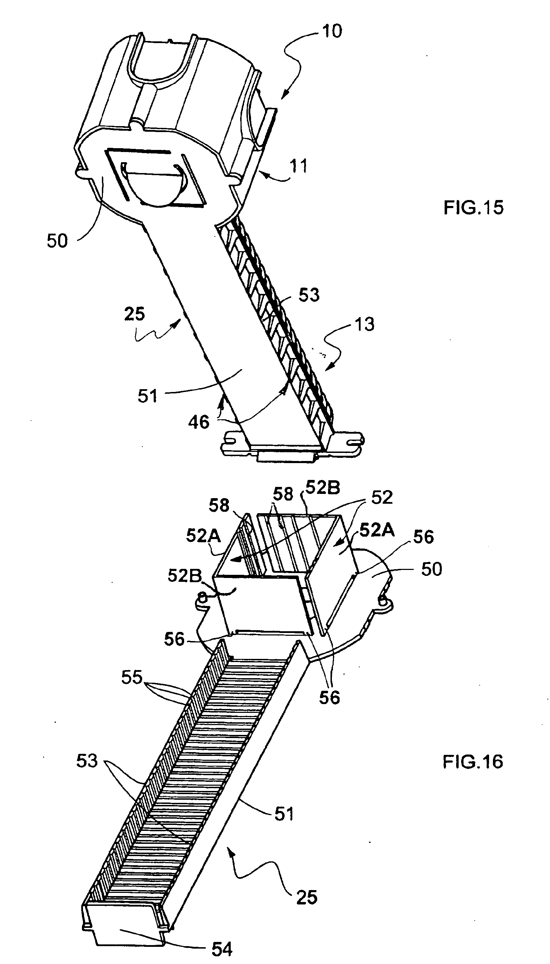

Si désiré, et ainsi qu'il sera décrit ultérieurement en référence aux figures 15 et 16, il peut être adjoint, à la boîte d'encastrement 10 ainsi constituée, un couvercle 25 apte à recouvrir l'ensemble, c'est-à-dire apte à recouvrir aussi bien le corps de boîte 11 que le pied 13.

Les dispositions qui précèdent sont bien connues par elles-mêmes, au moins dans leur principe, notamment par le brevet européen No 0 440 556 déjà mentionné ci-dessus, et, ne relevant pas en propre de la présente invention, elles ne seront pas décrites plus en détail ici.

Seuls seront décrits ci-après les éléments de la boîte d'encastrement 10 nécessaires à la compréhension de l'invention.

Suivant l'invention, le pied 13 constitue une pièce distincte du corps de boîte 11, et, sur une partie au moins de sa longueur à compter de celle de ses extrémités par laquelle il est destiné à être abouté à ce corps de boîte 11, et, préférentiellement, tel que représenté, sur la totalité de cette longueur, il est segmenté longitudinalement en tronçons 26 successifs, avec, associés à chacun de ces tronçons 26, et suivant des modalités décrites plus en détail ultérieurement, des moyens d'engagement 27, qui en coopération avec des moyens d'engagement 28 prévus de manière complémentaire en correspondance sur le corps de boîte 11, en au moins un endroit de celui-ci, sont aptes à permettre sa solidarisation à ce dernier.

Préférentiellement, et cela est le cas dans la forme de réalisation représentée, les tronçons 26 du pied 13 sont tous identiques entre eux et ils sont établis à un pas régulier.

Suivant la forme de réalisation représentée, les moyens d'engagement 27 associés à chacun des tronçons 26 du pied 13 comportent une portion d'emboîtement 29, les moyens d'engagement 28 prévus sur le corps de boîte 11 comportant, corollairement, une portion d'emboîtement 30 conformée à l'image de celle 29 de ces tronçons 26 et apte, ainsi, à coopérer en emboîtement avec cette dernière.

Plus précisément, dans cette forme de réalisation, la portion d'emboîtement 29 de chacun des tronçons 26 du pied 13 est formée par une fraction, au moins, et, préférentiellement, tel que représenté, par la totalité, de la partie de ce tronçon 26 qui appartient au fond 19 de ce pied 13.

Dans la forme de réalisation représentée, la portion d'emboîtement 29 de chacun des tronçons 26 du pied 13 forme un demi-anneau.

Autrement dit, elle s'étend sur 180°.

Préférentiellement, et cela est le cas dans la forme de réalisation représentée, cette portion d'emboîtement 29 a, dans son plan, c'est-à-dire dans un plan perpendiculaire à la direction d'allongement du pied 13, un contour hémicirculaire.

Dans la forme de réalisation représentée, la section transversale de la surface interne de la portion d'emboîtement 29 de chacun des tronçons 26 du pied 13, c'est-à-dire la section de cette portion d'emboîtement 29 dans un plan parallèle à la direction d'allongement de ce pied 13, est globalement convexe.

Par exemple, et tel que représenté, elle est hémicirculaire.

Dans la forme de réalisation représentée, les tronçons 26 du pied 13 sont séparés deux à deux par des gorges 32 dont la surface interne a une section transversale globalement concave.

Par exemple, et tel que représenté, cette section transversale, qui est à apprécier suivant les mêmes conditions que la section transversale de la portion d'emboîtement 29, est globalement hémicirculaire.

En pratique, la portion d'emboîtement 29 de chacun des tronçons 26 du pied 13 est équi-épaisse en chacun de ses points.

Autrement dit, la section transversale de sa surface externe est identique à celle de sa surface interne, tout se passant comme si une telle portion d'emboîtement 29 résultait d'une déformation locale de la paroi formant le fond 19 du pied 13.

Il en est de même pour les gorges 32 séparant deux à deux les tronçons 26 de ce pied 13.

Il résulte de ce qui précède que, dans la forme de réalisation représentée, le pied 13 a, par son fond 19, la configuration générale d'un demi-tube annelé.

Il résulte également de ce qui précède que la portion d'emboîtement 30 que présente le corps de boîte 11 forme, elle aussi, un demi-anneau, qui est en négatif ce que représente en positif le demi-anneau que forme la portion d'emboîtement 29 de chacun des tronçons 26 du pied 13.

En pratique, dans la forme de réalisation représentée, cette portion d'emboîtement 30 du corps de boîte 11 s'étend entre deux nervures 33 complémentaires des gorges 32 du pied 13.

Dans la forme de réalisation représentée, les moyens d'engagement 27 associés à chacun des tronçons 26 du pied 13 comportent, également, deux rainures d'encliquetage 34, qui, chacune respectivement, s'étendent longitudinalement de part et d'autre d'un tel tronçon 26, et les moyens d'engagement 28 prévus sur le corps de boîte 11 comportent, en correspondance, deux ailes d'encliquetage 35 propres à venir chacune respectivement en prise avec de telles rainures d'encliquetage 34.

Préférentiellement, et cela est le cas dans la forme de réalisation représentée, chacune des rainures d'encliquetage 34 du pied 13 est précédée d'un chanfrein d'engagement 36.

En pratique, dans la forme de réalisation représentée, les chanfreins d'engagement 36 ainsi associés aux rainures d'encliquetage 34 appartiennent, chacun respectivement, à des bossages 37, en forme de quart d'olive, qui font saillie vers l'intérieur sur les parois longitudinales 20.

Pour chacun des tronçons 26 du pied 13, il y a ainsi, au droit des extrémités de la portion d'emboîtement 29 d'un tel tronçon 26, à distance de ces extrémités, deux bossages 37.

Corollairement, les ailes d'encliquetage 35 du corps de boîte 11 encadrent sa portion d'emboîtement 30, en étant chacune respectivement disposées aux extrémités de celle-ci.

En pratique, ces ailes d'encliquetage 35 sont coplanaires, et elles s'étendent perpendiculairement au pan 18 de la paroi latérale 16 du corps de boîte 11 auquel doit être abouté le pied 13.

Dans la forme de réalisation représentée, les moyens d'engagement 28 prévus sur le corps de boîte 11 appartiennent à un appendice 39, qui fait saillie vers l'extérieur sur la paroi latérale 16 de ce corps de boîte 11, et, plus précisément, sur le pan 18 de cette paroi latérale 16 auquel doit être abouté le pied 13.

Dans la forme de réalisation représentée, cet appendice 39 présente, en outre, latéralement, en saillie sur un jambage axial 40, au-delà des moyens d'engagement 28 qu'il comporte, un jeu d'ailettes transversales 41 qui définissent, entre elles, de part et d'autre du jambage axial 40, deux rainures 42.

Pour la communication du logement 14 du pied 13 avec le logement 12 du corps de boîte 11, le pan 18 de la paroi latérale 1 6 de ce corps de boîte 11 auquel est abouté ce pied 13 est échancré.

Dans la forme de réalisation représentée, deux échancrures 43 sont prévues à cet effet.

Elles encadrent l'un des fûts 44 que comporte par ailleurs le corps de boîte 1 1 pour une fixation par vissage du mécanisme de l'appareil concerné.

La portion d'emboîtement 30 du corps de boîte 11 est établie en bordure de ces échancrures 43, et il en est de même de ses ailes d'encliquetage 35.

Enfin, dans la forme de réalisation représentée, le pied 13 comporte, longitudinalement, de part et d'autre de ses tronçons 26 successifs, au-delà de ses parois longitudinales 20, pour des raisons qui apparaîtront ultérieurement, deux ridelles 46.

Dans la forme de réalisation représentée, ces ridelles 46 sont fragmentées en doigts 47, et ceux-ci font saillie de place en place sur des retours 48 que les parois longitudinales 20 présentent dos à dos en équerre vers l'extérieur.

Ainsi qu'il est aisé de le comprendre, le pied 13 peut être tronçonné à la demande à partir de sa partie supérieure, c'est-à-dire à partir de son extrémité opposée à celle présentant une paroi transversale d'extrémité 22.

Préférentiellement, ce tronconnage est fait à l'aide d'un outil de coupe, par exemple un couteau, et, pour assurer le guidage de cet outil de coupe, il est avantageusement tiré profit des gorges que forme par elle-même extérieurement la portion d'emboîtement 29 des tronçons 26.

A chaque fois, il est éliminé le nombre de tronçons 26 nécessaire au réglage en hauteur voulu pour le corps de boîte 1 1 .

Il suffit, ensuite, de rapporter, par son appendice 39, ce corps de boîte 11 sur le pied 13 à la partie supérieure de ce dernier.

A chaque fois, les moyens d'engagement 28 que comporte à cet effet le corps de boîte 11 viennent se prendre avec les moyens d'engagement 27 du tronçon 26 terminal du pied 13, la portion d'emboîtement 30 du corps de boîte 11 s'emboîtant avec la portion d'emboîtement 29 de ce tronçon 26, cependant que les ailes d'encliquetage 35 du corps de boîte 11 viennent en prise avec les rainures d'encliquetage 34 de ce pied 13.

Une fois les moyens d'engagement 28 du corps de boîte 11 ainsi en prise avec les moyens d'engagement 27 du tronçon 26 terminal du pied 13, ce pied 13 se trouve solidarisé à ce corps de boîte 11.

Bien entendu, cette solidarisation peut intervenir préalablement à la mise en oeuvre de la boîte d'encastrement 10, ou lors même de cette mise en oeuvre.

Elle est en outre avantageusement débrayable.

Autrement dit, une désolidarisation du corps de boîte 11 par rapport au pied 13 est possible si désiré.

Dans la forme de réalisation représentée, et de manière connue en soi, le couvercle 25 éventuellement mis en oeuvre comporte, en continuité l'une avec l'autre, deux parties, à savoir une partie 50, dont le contour est à l'image de celui du débouché du corps de boîte 11, et une partie 51 dont le contour est l'image de celui du débouché du pied 13.

Sur sa partie 50, le couvercle 25 porte, de manière détachable, au moins une cloison 52, qui, suivant des modalités décrites plus en détail ultérieurement, est apte à être rapportée localement sur le pied 13 si désiré.

Par exemple, et tel que représenté, deux cloisons 52 sont ainsi prévues de manière détachable sur cette partie 50 du couvercle 25.

Le long des bords longitudinaux de sa partie 51, le couvercle 25 porte, en équerre, des rebords 53, par lesquels il est propre à s'encastrer entre les ridelles 46 du pied 13.

Enfin, à l'extrémité de cette partie 51, le couvercle 25 comporte une paroi transversale 54.

Comme décrit dans le brevet européen No 0 440 556 déjà mentionné ci-dessus, la partie 51 du couvercle 25 est sécable.

Elle présente, à cet effet, transversalement, de place en place, en creux sur sa surface interne, des rainures 55, figure 16.

Il est ainsi possible d'ajuster sa longueur en fonction du tronçonnage appliqué au pied 13.

- Dans la forme de réalisation représentée, les cloisons 52 que le couvercle 25 porte sur sa partie 50 ne se rattachent que de place en place à celle-ci, par des zones de moindre résistance 56.

En outre, dans cette forme de réalisation, chacune de ces cloisons 52 présente deux pans 52A, 52B, qui forment un dièdre entre eux, et dont un, au moins, a une largeur suffisante pour pouvoir s'étendre localement de l'un à l'autre des bords longitudinaux du pied 13, et, plus précisément, de l'une à l'autre des parois longitudinales 20 de ce pied 13, en étant alors en prise, par sa tranche, avec les rainures d'encliquetage 34 prévues le long de ces bords longitudinaux.

En pratique, les deux pans 52A, 52B des cloisons 52 ont une même largeur, et le dièdre qu'ils forment est un dièdre droit.

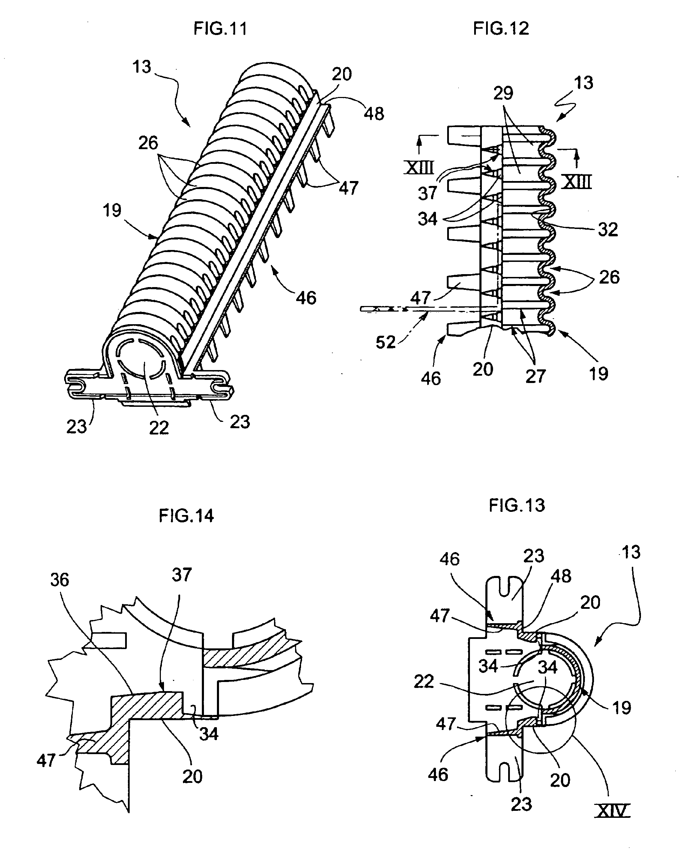

Lorsque la goulotte associée présente, longitudinalement, au moins une cloison de séparation, il est possible, ainsi, de rapporter, sur la partie du pied 13 présent entre les deux tronçons de socle successifs de cette goulotte, au droit de cette cloison de séparation, l'une des cloisons 52 prévues de manière détachable à cet effet sur le couvercle 25, tel que schématisé en traits interrompus sur la figure 12, pour assurer toute la continuité souhaitable pour la séparation correspondante.

Préférentiellement, et cela est le cas dans la forme de réalisation représentée, l'un au moins des pans 52A, 52B des cloisons 52 portées par le couvercle 25, et, en pratique, chacun de ceux-ci, présente, transversalement, de place en place, des rainures 58, pour son éventuel tronçonnage en longueur.

Il est ainsi possible d'adapter à la hauteur de la goulotte celui de ces pans 52A, 52B qui s'étend en continuité avec la cloison de séparation de celle-ci.

Pour le reste, les dispositions sont du type de celles décrites dans le brevet européen No 0 440 556.

Si désiré, les rainures 42 que présente l'appendice 39 du corps de boîte 11 peuvent être mises à profit, d'abord, pour le support, lors des transports, des vis à mettre en oeuvre pour la fixation, à ce corps de boîte 11, du mécanisme de l'appareil concerné, puis, au montage, pour le calage des conducteurs électriques assurant la desserte de cet appareil lorsque celui-ci est un appareil électrique.

Suivant une variante de réalisation non représentée, le corps de boîte 11 comporte un appendice 39, et, donc, des moyens d'engagement 28, à portion d'emboîtement 30 et ailes d'encliquetage 35, en au moins deux endroits distincts, et, par exemple, sur au moins deux pans 18 distincts de sa paroi latérale 16.

Indépendamment du pied 13 normalement abouté à un tel corps de boîte 11, il est alors possible de relier celui-ci à un autre corps de boîte 11 de même type à l'aide d'un autre pied 13 dûment tronçonné en conséquence.

## Revendications

1. Boîte d'encastrement, notamment pour appareil électrique, du genre comportant un corps de boîte (11), qui forme un logement (12) propre à la réception du mécanisme d'un tel appareil, et un pied (13), qui, prolongeant latéralement le corps de boîte (11), forme un logement (14) propre à la réception des conducteurs électriques ou autres conduits nécessaires à la desserte de cet appareil, le pied (13) constituant une pièce distincte du corps de boîte (11), **caractérisée en ce que** sur une partie au moins de la longueur du pied à compter de celle de ses extrémités par laquelle il est destiné à être abouté à ce corps de boîte (11), le pied est segmenté longitudinalement en tronçons (26) successifs, avec, associés à chacun de ces tronçons (26), des moyens d'engagement (27), qui, en coopération avec des moyens d'engagement (28) prévus de manière complémentaire en correspondance sur le corps de boîte (11), en au moins un endroit de celui-ci, sont aptes à permettre sa solidarisation à ce dernier.

2. Boîte d'encastrement suivant la revendication 1, **caractérisée en ce que** les moyens d'engagement (27) associés à chacun des tronçons (26) du pied (13) comportent une portion d'emboîtement (29), les moyens d'engagement (28) prévus sur le corps de boîte (11) comportant, corollairement, une portion d'emboîtement (30) conformée à l'image de celle (29) de ces troncons (26).

3. Boîte d'encastrement suivant la revendication 2, **caractérisée en ce que** la portion d'emboîtement (29) de chacun des tronçons (26) du pied (13) est formée par une fraction, au moins, de la partie de ce tronçon (26) qui appartient au fond (19) de ce pied (13).

4. Boîte d'encastrement suivant la revendication 3, **caractérisée en ce que** la portion d'emboîtement (29) de chacun des tronçons (26) du pied (13) est formée par la totalité de la partie de ce tronçon (26) qui appartient au fond (19) de ce pied (13).

5. Boîte d'encastrement suivant l'une quelconque des revendications 2 à 4, **caractérisée en ce que** la portion d'emboîtement (29) de chacun des tronçons (26) du pied (13) forme un demi-anneau.

6. Boîte d'encastrement suivant la revendication 5, **caractérisée en ce que** la portion d'emboîtement (29) de chacun des tronçons (26) du pied (13) a, dans son plan, un contour hémicirculaire.

7. Boîte d'encastrement suivant l'une quelconque des revendications 2 à 5, **caractérisée en ce que** la section transversale de la surface interne de la portion d'emboîtement (29) de chacun des tronçons (26) du pied (13) est globalement convexe.

8. Boîte d'encastrement suivant la revendication 7, **caractérisée en ce que** la section transversale de la surface interne de la portion d'emboîtement (29) de chacun des tronçons (26) du pied (13) est globalement hémicirculaire.

9. Boîte d'encastrement suivant l'une quelconque des revendications 2 à 7, **caractérisée en ce que** les tronçons (26) du pied (13) sont séparés deux à deux par des gorges (32) dont la surface interne a une section transversale globalement concave.

10. Boîte d'encastrement suivant la revendication 9, **caractérisée en ce que** la section transversale de la surface interne des gorges (32) du pied (13) est globalement hémicirculaire.

11. Boîte d'encastrement suivant l'une quelconque des revendications 2 à 10, **caractérisée en ce que**, par son fond (19), le pied (13) a la configuration générale d'un demi-tube annelé.

12. Boîte d'encastrement suivant l'une quelconque des revendications 1 à 11, **caractérisé en ce que**, à son extrémité opposée au corps de boîte (11), le pied (13) est fermé par une paroi transversale d'extrémité (22).

13. Boîte d'encastrement suivant la revendication 12, **caractérisée en ce que** la paroi transversale d'extrémité (22) du pied (13) se prolonge, latéralement, et de part et d'autre, par des ailes de fixation (23).

14. Boîte d'encastrement suivant l'une quelconque des revendications 1 à 13, **caractérisée en ce que** le pied (13) comporte, longitudinalement, de part et d'autre de ses troncons (26) successifs, deux ridelles (46).

15. Boîte d'encastrement suivant la revendication 14, **caractérisée en ce que** les ridelles (46) que comporte le pied (13) sont fragmentées en doigts (47).

16. Boîte d'encastrement suivant l'une quelconque des revendications 1 à 15, **caractérisée en ce que** les moyens d'engagement (27) associés à chacun des tronçons (26) du pied (13) comportent deux rainures d'encliquetage (34), qui, chacune respectivement, s'étendent longitudinalement de part et d'autre d'un tel tronçon (26), et les moyens d'engagement (28) prévus sur le corps de boîte (11) comportent deux ailes d'encliquetage (35) propres à venir chacune respectivement en prise avec de telles rainures d'encliquetage (34).

17. Boîte d'encastrement suivant la revendication 16, **caractérisée en ce** chacune des rainures d'encliquetage (34) du pied (13) est précédée d'un chanfrein d'engagement (36).

18. Boîte d'encastrement suivant l'une quelconque des revendications 16 et 17, **caractérisée en ce que**, le pied (13) comportant un fond (19), et, le long des bords de celui-ci, deux parois longitudinales (20), les chanfreins d'engagement (36) associés aux rainures d'encliquetage (34) appartiennent, chacun respectivement, à des bossages (37), en forme de quart d'olive, qui font saillie vers l'intérieur sur les parois longitudinales (20).

19. Boîte d'encastrement suivant l'une quelconque des revendications 1 à 18, **caractérisée en ce que** les tronçons (26) du pied (13) sont tous identiques entre eux et ils sont établis à un pas régulier.

20. Boîte d'encastrement suivant les revendications 2 et 9, prises conjointement, **caractérisée en ce que** la portion d'emboîtement (30) du corps de boîte (11) s'étend entre deux nervures (33) complémentaires dés gorges (32) du pied (13).

21. Boîte d'encastrement suivant les revendications 2 et 16, prises conjointement, **caractérisée en ce que** les ailes d'encliquetage (35) du corps du boîte (11) encadrent sa portion d'emboîtement (30).

22. Boîte d'encastrement suivant l'une quelconque des revendications 1 à 21, **caractérisée en ce que** les moyens d'engagement (28) prévus sur le corps de boîte (11) appartiennent à un appendice (39) qui fait saillie vers l'extérieur sur la paroi latérale (16) de ce corps de boîte (11).

23. Boîte d'encastrement suivant la revendication 22, **caractérisée en ce que** l'appendice (39) du corps de boîte (11) présente, latéralement, en saillie, un jeu d'ailettes transversales (41) qui définissent, entre elles, deux rainures (42).

24. Boîte d'encastrement suivant l'une quelconque des revendications 1 à 23, **caractérisée en ce que** le corps de boîte (11) comporte des moyens d'engagement (28) en au moins deux endroits distincts.

25. Boîte d'encastrement suivant l'une quelconque des revendications 1 à 24, **caractérisée en ce que**, un couvercle (25) lui étant adjoint, ce couvercle (25) porte, de manière détachable, au moins une cloison (52), et cette cloison (52) présente deux pans (52A, 52B), qui forment un dièdre entre eux, et dont un au moins a une largeur suffisante pour pouvoir s'étendre localement de l'un à l'autre des bords longitudinaux du pied (13), en étant alors en prise avec des rainures d'encliquetage (34) prévues le long de ces bords longitudinaux.

26. Boîte d'encastrement suivant la revendication 25, **caractérisée en ce que** l'un au moins des pans (52A, 52B) de la cloison (52) portée par le couvercle (25) présente, transversalement, de place en place, des rainures (58), pour son éventuel tronçonnage en longueur.

## Claims

1. A flush mounting box, in particular for electrical apparatus, of the kind comprising a box body (11) which forms a housing (12) for receiving the mechanism of such an apparatus, and a foot (13) which, laterally extending the box body (11) forms a housing (14) for receiving the electrical conductors or other conduits necessary for serving said apparatus, the foot (13) constituting a part separate from the box body (11), **characterised in that** over a part at least of the length of the foot from that one of its ends by way of which it is intended to be in butting relationship with said box body (11) the foot is segmented longitudinally in the form of successive portions (26) with, associated with each of said portions (26), engagement means (27) which, co-operating with engagement means (28) provided in complementary fashion in corresponding relationship on the box body (11) at at least one location thereof, are capable of permitting fixing thereof to the box body.

2. A flush mounting box according to claim 1 **characterised in that** the engagement means (27) associated with each of the portions (26) of the foot (13) comprise a joining portion (29), the engagement means (28) provided on the box body (11) comprising in corresponding fashion a joining portion (30) shaped in the image of that (29) of said portions (26).

3. A flush mounting box according to claim 2 **characterised in that** the joining portion (29) of each of the portions (26) of the foot (13) is formed by a fraction at least of the part of said portion (26) which belongs to the bottom (19) of said foot (13).

4. A flush mounting box according to claim 3 **characterised in that** the joining portion (29) of each of the portions (26) of the foot (13) is formed by the whole of the part of said portion (26) which belongs to the bottom (19) of said foot (13).

5. A flush mounting box according to any one of claims 2 to 4 **characterised in that** the joining portion (29) of each of the portions (26) of the foot (13) forms a half-ring.

6. A flush mounting box according to claim 5 **characterised in that** the joining portion (29) of each of the portions (26) of the foot (13) is of a semicircular contour in its plane.

7. A flush mounting box according to any one of claims 2 to 5 **characterised in that** the cross-section of the internal surface of the joining portion (29) of each of the portions (26) of the foot (13) is convex overall.

8. A flush mounting box according to claim 7 **characterised in that** the cross-section of the internal surface of the joining portion (29) of each of the portions (26) of the foot (13) is semicircular overall.

9. A flush mounting box according to any one of claims 2 to 7 **characterised in that** the portions (26) of the foot (13) are separated in twos by grooves (32), the internal surface of which is of a cross-section that is concave overall.

10. A flush mounting box according to claim 9 **characterised in that** the cross-section of the internal surface of the grooves (32) of the foot (13) is semicircular overall.

11. A flush mounting box according to any one of claims 2 to 10 **characterised in that**, by way of its bottom (19), the foot (13) is of the general configuration of a ringed half-tube.

12. A flush mounting box according to any one of claims 1 to 11 **characterised in that**, at its opposite end to the box body (11), the foot (13) is closed by a transverse end wall (22).

13. A flush mounting box according to claim 12 **characterised in that** the transverse end wall (22) of the foot (13) is prolonged laterally on respective sides by fixing legs (23).

14. A flush mounting box according to any one of claims 1 to 13 **characterised in that** the foot (13) comprises two rack configurations (46) longitudinally on respective sides of its successive portions (26).

15. A flush mounting box according to claim 14 **characterised in that** the rack configurations (46) that the foot (13) comprises are divided into fingers (47).

16. A flush mounting box according to any one of claims 1 to 15 **characterised in that** the engagement means (27) associated with each of the portions (26) of the foot (13) comprise two latching grooves (34) which each respectively extend longitudinally on respective sides of such a portion (26) and the engagement means (28) provided on the box body (11) comprise two latching legs (35) for each coming respectively into engagement with such latching grooves (34).

17. A flush mounting box according to claim 16 **characterised in that** each of the latching grooves (34) of the foot (13) is preceded by an engagement bevel (36).

18. A flush mounting box according to any one of claims 16 and 17 **characterised in that**, the foot (13) comprising a bottom (19) and along the edges thereof two longitudinal walls (20), the engagement bevels (36) associated with the latching grooves (34) each respectively belong to bosses (37) of quarter-olive shape which project inwardly on the longitudinal walls (20).

19. A flush mounting box according to any one of claims 1 to 18 **characterised in that** the portions (26) of the foot (13) are all identical with each other and they are disposed at a regular pitch.

20. A flush mounting box according to claims 2 and 9 in combination **characterised in that** the joining portion (30) of the box body (11) extends between two complementary ribs (33) to the grooves (32) of the foot (13).

21. A flush mounting box according to claims 2 and 16 in combination **characterised in that** the latching legs (35) of the box body (11) border its joining portion (30).

22. A flush mounting box according to any one of claims 1 to 21 **characterised in that** the engagement means (28) provided on the box body (11) belong to a protrusion (39) which projects outwardly on the lateral wall (16) of said box body (11),

23. A flush mounting box according to claim 22 **characterised in that** the protrusion (39) of the box body (11) laterally has in projecting relationship a set of transverse rib portions (41) which between them define two grooves (42).

24. A flush mounting box according to any one of claims 1 to 23 **characterised in that** the box body (11) comprises engagement means (28) at at least two separate locations.

25. A flush mounting box according to any one of claims 1 to 24 **characterised in that**, a cover (25) being attached thereto, said cover (25) detachably comprises at least one partition (52) and said partition (52) has two surface portions (52A, 52B) which form a dihedron between them and of which one at least is of a sufficient width to be capable of extending locally from one of the longitudinal edges of the foot (13) to the other, then being in engagement with latching grooves (34) provided along said longitudinal edges.

26. A flush mounting box according to claim 25 **characterised in that** one at least one of the surface portions (52A, 52B) of the partition (52) which is carried by the cover (25) is provided transversely at spaced locations with grooves (58) for possibly cutting it to length.

## Patentansprüche

1. Unterputzdose insbesondere für ein elektrisches Gerät, bestehend aus einem Dosenkörper (11), der eine Aufnahme (12) für den Mechanismus eines solchen Geräts formt, und einem Fuß (13), der den Dosenkörper (11) seitlich verlängert und eine Aufnahme (14) für elektrische Leiter oder andere für die Bedienung dieses Geräts erforderlicher Leitungen formt, wobei der Fuß (13) ein vom Dosenkörper (11) getrenntes Teil bildet, **dadurch gekennzeichnet, dass** der Fuß auf mindestens einem Teil der Länge des Fußes, von demjenigen seiner Enden aus gerechnet, mit dem er dazu bestimmt ist, an diesen Dosenkörper (11) angefügt zu werden, in Längsrichtung in aufeinander folgende Abschnitte (26) unterteilt ist, wobei jedem dieser Abschnitte (26) Eingreifmittel (27) zugeordnet sind, die in Zusammenarbeit mit Eingreifmitteln (28), die ergänzend in Entsprechung auf dem Dosenkörper (11), an mindestens einer Stelle von diesem, vorgesehen sind, seine Befestigung an diesem gestatten können.

2. Unterputzdose nach Anspruch 1, **dadurch gekennzeichnet, dass** die jedem der Abschnitte (26) des Fußes (13) zugeordneten Eingreifmittel (27) einen Einsteckbereich (29) aufweisen, wobei die auf dem Dosenkörper (11) vorgesehenen Eingreifmittel (28) gleichzeitig einen Einsteckbereich (30) aufweisen, der nach dem Bild des Einsteckbercichs (29) dieser Abschnitte (26) ausgebildet ist.

3. Unterputzdose nach Anspruch 2, **dadurch gekennzeichnet, dass** der Einsteckbereich (29) jedes der Abschnitte (26) des Fußes (13) zumindest von einem Teil des zum Boden (19) dieses Fußes (13) gehörenden Bereichs dieses Abschnitts (26) geformt ist.

4. Unterputzdose nach Anspruch 3, **dadurch gekennzeichnet, dass** der Einsteckbereich (29) jedes der Abschnitte (26) des Fußes (13) durch die Gesamtheit des zum Boden (19) dieses Fußes (13) gehörenden Bereichs dieses Abschnitts (26) gebildet ist.

5. Unterputzdose nach einem der Ansprüche 2 bis 4, **dadurch gekennzeichnet, dass** der Einsteckbereich (29) jedes der Abschnitte (26) des Fußes (13) einen Halbring bildet.

6. Unterputzdose nach Anspruch 5, **dadurch gekennzeichnet, dass** der Einsteckbereich (29) jedes der Abschnitte (26) des Fußes (13) in seiner Ebene einen halbkreisförmigen Umriss besitzt.

7. Unterputzdose nach einem der Ansprüche 2 bis 5, **dadurch gekennzeichnet, dass** der Querschnitt der Innenfläche des Einsteckbereichs (29) jedes der Abschnitte (26) des Fußes (13) insgesamt konvex ist.

8. Unterputzdose nach Anspruch 7, **dadurch gekennzeichnet, dass** der Querschnitt der Innenfläche des Einsteckbereichs (29) jedes der Abschnitte (26) des Fußes (13) insgesamt halbkreisförmig ist.

9. Unterputzdose nach einem der Ansprüche 2 bis 7, **dadurch gekennzeichnet, dass** die Abschnitte (26) des Fußes (13) paarweise durch Rillen (32) getrennt sind, deren Innenfläche einen insgesamt konkaven Querschnitt hat.

10. Unterputzdose nach Anspruch 9, **dadurch gekennzeichnet, dass** der Querschnitt der Innenfläche der Rillen (32) des Fußes (13) insgesamt halbkreisförmig ist.

11. Unterputzdose nach einem der Ansprüche 2 bis 10, **dadurch gekennzeichnet, dass** der Fuß (13) durch seinen Boden (19) die allgemeine Ausbildung eines geringelten Halbrohrs hat.

12. Unterputzdose,nach einem der Ansprüche 1 bis 11, **dadurch gekennzeichnet, dass** der Fuß (13) an seinem dem Dosenkörper (11) entgegengesetzten Ende durch eine Endquerwand (22) geschlossen ist.

13. Unterputzdose nach Anspruch 12, **dadurch gekennzeichnet, dass** die Endquerwand (22) des Fußes (13) seitlich und zu beiden Seiten durch Befestigungslappen (23) verlängert ist.

14. Unterputzdose nach einem der Ansprüche 1 bis 13, **dadurch gekennzeichnet, dass** der Fuß (13) ins Längsrichtung zu beiden Seiten seiner aufeinander folgenden Abschnitte (26) zwei Pritschen (46) aufweist.

15. Unterputzdose nach Anspruch 14, **dadurch gekennzeichnet, dass** die Pritschen (46), die der Fuß (13) aufweist, in Finger (47) unterteilt sind.

16. Unterputzdose nach einem der Ansprüche 1 bis 15, **dadurch gekennzeichnet, dass** die jedem der Abschnitte (26) des Fußes (13) zugeordneten Eingreifmittel (27) zwei Einrastnuten (34) aufweisen, die sich jeweils in Längsrichtung zu beiden Seiten eines solchen Abschnitts (26) erstrecken, und die auf dem Dosenkörper (11) vorgesehenen Eingreifmittel (28) zwei Einrastwangen (35) aufweisen, die jeweils mit solchen Einrastnuten (34) in Eingriff kommen können.

17. Unterputzdose nach Anspruch 16, **dadurch gekennzeichnet, dass** jeder der Einrastnuten (34) des Fußes (13) eine Einführungsabschrägung (36) vorhergeht.

18. Unterputzdose nach einem der Ansprüche 16 und 17, **dadurch gekennzeichnet, dass**, wenn der Fuß (13) einen Boden (19) und längs dessen Rändern zwei Längswände (20) aufweist, die den Einrastnuten (34) zugeordneten Kinführungsabschrägungen (36) jeweils zu Erhebungenl(37) in Form einer Viertelolive gehören, die auf den Längswänden (20) nach innen vorstehen.

19. Unterputzdose nach einem der Ansprüche 1 bis 18, **dadurch gekennzeichnet, dass** die Abschnitte (26) des Fußes (13) alle untereinander identisch sind und in einem regelmäßigen Schritt angeordnet sind.

20. Unterputzdose nach den Ansprüchen 2 und 9 zusammen, **dadurch gekennzeichnet, dass** der Einsteckbereich (30) des Dosenkörpers (11) sich zwischen zwei zu den Rillen (32) des Fußes (13) komplementären Rippen (33) erstreckt.

21. Unterputzdose nach den Ansprüche 2 und 16 zusammen, **dadurch gekennzeichnet, dass** die Einrastwangen (35) des Dosenkörpers (11) seinen Einsteckbereich (30) umrahmen.

22. Unterputzdose nach einem der Ansprüche 1 bis 21, **dadurch gekennzeichnet, dass** die auf dem Dosenkörper (11) vorgesehenen Eingreifmittel (28) zu einem Ansatz (39) gehören, der an der Seitenwand (16) dieses Dosenkörpers (11) nach außen vorsteht.

23. Unterputzdose nach Anspruch 22, **dadurch gekennzeichnet, dass** der Ansatz (39) des Dosenkörpers (11) seitlich vorstehend einen Satz von Querrippen (41) aufweist, die miteinander zwei Nuten (42) bilden.

24. Unterputzdose nach einem der Ansprüche 1 bis 23, **dadurch gekennzeichnet, dass** der Dosenkörper (11) an mindestens zwei verschiedenen Stellen Eingreifmittel (28) aufweist.

25. Unterputzdose nach einem der Ansprüche 1 bis 24, **dadurch gekennzeichnet, dass**, wenn ihr ein Deckel (25) beigegeben ist, dieser Deckel (25) abtrennbar mindestens eine Wand (52) trägt und diese Wand (52) zwei Wangen (52A, 52B) aufweist, die miteinander ein Dieder bilden und von denen mindestens eine eine ausreichende Länge hat, um sich örtlich von einem der Längsränder des Fußes (13) zum anderen erstrecken zu können, indem sie mit längs dieser Längsränder vorgesehenen Einrastnuten (34) in Eingriff ist.

26. Unterputzdose nach Anspruch 25, **dadurch gekennzeichnet, dass** mindestens eine der Wangen (52A, 52B) der vom Deckel (25) getragenen Wand (52) in Querrichtung stellenweise Rillen (58) für ihre ggf. vorzunehmende Ablängung aufweist.
